# EUROPÄISCHE PATENTSCHRIFT

(11) **EP 1 370 858 B1**
(45) Veröffentlichungstag und Bekanntmachung des Hinweises auf die Patenterteilung: **31.12.2008**
(21) Anmeldenummer: 02735003.2
(22) Anmeldetag: 18.03.2002
(51) Int. Cl.: G01N 27/447

(54) **ELEKTROPHORESEVORRICHTUNG UND IHRE VERWENDUNG**
ELECTROPHORESIS DEVICE AND THE USE THEREOF
DISPOSITIF D'ELECTROPHORESE ET SON UTILISATION

(30) Priorität: 19.03.2001 DE 10113257
(43) Veröffentlichungstag der Anmeldung: 17.12.2003
(73) Patentinhaber: INSTITUT FÜR MIKROTECHNIK MAINZ GmbH, 55129 Mainz-Hechtsheim (DE)
(72) Erfinder: DÖRNER, Wolfgang, 65239 Hochheim (DE); KONRAD, Renate DI, . (DE)
(74) Vertreter: Fuchs
(86) Internationale Anmeldenummer: PCT/DE2002/000974
(87) Internationale Veröffentlichungsnummer: WO 2002/075298

(56) Entgegenhaltungen:
- EP-A- 0 544 969
- EP-A- 0 977 030
- DE-A- 19 826 020
- US-A- 5 599 432
- US-A- 6 013 165
- BECKER H ET AL: "Planar quartz chips with submicron channels for two-dimensional capillary electrophoresis applications" JOURNAL OF MICROMECHANICS & MICROENGINEERING, NEW YORK, NY, US, Bd. 8, Nr. 1, 1. März 1998 (1998-03-01), Seiten 24-28, XP002088541 ISSN: 0960-1317
- GOERG A ET AL: "THE CURRENT STATE OF TWO-DIMENSIONAL ELECTROPHORESIS WITH IMMOBILIZED PH GRADIENTS" ELECTROPHORESIS, WEINHEIM, DE, Bd. 21, Nr. 6, April 2000 (2000-04), Seiten 1037-1053, XP001015374 ISSN: 0173-0835

## Beschreibung

Die vorliegende Erfindung betrifft eine Elektrophoresevorrichtung. Die Erfindung betrifft weiterhin die Verwendung dieser Vorrichtung zur Durchführung einer 2D-elektrophoretischen Auftrennung von Makromolekülen, bei dem diese Vorrichtung verwendet wird.

Ein übliches Verfahren zur Auftrennung von beispielsweise komplexen Proteingemischen ist die zweidimensionale Gelelektrophorese (2D-Gelelektrophorese). Dieses Verfahren besteht üblicherweise aus zwei separat nacheinander ausgeführten Elektrophoreseschritten, und zwar einer isoelektrischen Fokussierung (IEF) (1. Dimension) und einer denaturierenden SDS-Polyacrylamidgelelektrophorese (SDS-PAGE)(2. Dimension). Die IEF wird in der Regel in Polyacrylamidgelstreifen oder -gelstäbchen mit immobilisierten pH-Gradienten ausgeführt. Immobilisierte pH-Gradienten zeichnen sich dadurch aus, dass das Polymer die Puffersubstanzen kovalent gebunden enthält, sie müssen nicht mehr zusammen mit der Probe aufgetragen werden. Der Gradient ist somit im Gel fixiert. Alternativ dazu kann normales Polyacrylamidgel verwendet werden, wenn Ampholyte mit der Probe aufgetragen werden. Der feststehende pH-Gradient wird dadurch erzielt, dass die jeweiligen Enden des Gels in einen sauren Puffer (Anolyt) und einen basischen Puffer (Katolyt) eingetaucht werden. In einem anschließend angelegten elektrischen Feld wandern die Ampholyten in ihren spezifischen isoelektrischen Bereich und etablieren und stabilisieren so den pH-Gradienten. Die zu analysierenden Moleküle wandern im elektrischen Feld bis zu derjenigen Position, an denen der Gradient einen pH-Wert aufweist, der dem isoelektrischen Punkt des Moleküls entspricht. Die Trennung der Proteine in dieser 1.

Richtung erfolgt somit unabhängig von deren Größe oder Beweglichkeit, sondern ausschließlich nach deren isoelektrischen Eigenschaften. Die Gelstreifen bzw. Gelstäbchen werden nach Beendigung der IEF, ggf. nach Behandlung in separaten Gefäßen mit verschiedenen Mobilisierungs- und Waschpulvern und auf ein meist vertikales, in eine Elektrophoreseapparatur eingesetztes SDS-PAGE-Gel gelegt. Durch Anlegen einer Spannung werden die Proteine aus dem Gelstreifen/Gelstäbchen der 1. Dimension in das SDS-PAGE-Gel transportiert und dort in einer 2. Richtung nach ihrer Molekülmasse aufgetrennt.

Beide Verfahren lassen sich prinzipiell auch kapillar-elektrophoretisch umsetzen und werden da als CIEF bzw. CGE bezeichnet.

Nach der ersten Veröffentlichung eines 2D-Elektrophoreseverfahrens (P.H. O'Farrel 1975 J. Biol. Chem. 250, 4007-4021) wurden Methoden und Geräte entwickelt, welche die Durchführung beider Verfahren in einer Apparatur bzw. in einem Gel ermöglichen sollten (J. Shevitz 1983: *Electrophoretic system and method for multidimensional analysis;* US-A-4,385,974 und S.A. Hoefer 1978: *Fluid isolation electrophoresis apparatus and method;* US-A-4,101,401). Darin sind auch bereits Ansätze zur parallelen Verarbeitung mehrerer Proben beschrieben. So können mit kommerziell erhältlichen Systemen (Dalt-System, Hoefer Scientific Instruments, San Francisco, CA, USA)bis zu 12 Proben gleichzeitig der IEF unterzogen werden und bis zu 10 SDS-PAGE-Gele in einem Arbeitsgang laufen gelassen werden. Eine deutliche Miniaturisierung dieser Elektrophorese-Verfahren wurde bislang durch die Verkleinerung der Gele und Einführung eines teilautomatisierten Elektrophoresesystems erreicht.

In den letzten Jahren wurden auch die kapillar-elektrophoretischen Methoden mit den Mitteln der Mikrosystemtechnik weiter entwickelt. Die Tendenz geht dahin, Chips herzustellen, auf denen in miniaturisierter Form die Elektrophoreseelemente aufgebracht sind. Man kennt bereits den Einsatz geeigneter Chips für die CIEF von Proteinen (O. Hofman, D. Che, K.A. Cruickshank & U. Müller 1999: Adaptation of capillary isoelectric focusing to microchannels on a glass chip. Anal.Chem. 71, 678-686 und J. Xu, L. Locascio, M. Gaitan & C.S. Lee 2000: Roomtemperature imprinting method for plastic microchannel fabrication. Anal.Chem. 72, 1930-1933) als auch zur Proteintrennung auf SDS-Gelbasis (S. Yao, D.S. Anex, W.B. Caldwell, D.W. Arnold, K.B. Smith & P.G. Schultz 1999: SDS capillary gel electrophoresis of proteins in microfabricated channels. Proc. Natl. Acad. Sci. USA 96, 5372-5377). So sind Lösungen bekannt, die allgemein die Kombination zweier zueinander orthogonaler Elektrophoresetechniken vorschlagen, wie beispielsweise auch in der US-A-5,599,432 beschrieben ist.

Es ist allgemein bekannt, dass die konventionelle 2D-Gelelektrophorese sehr zeitaufwendig ist. Die Analyse einer Probe kann bis zu etwa 2 Tagen andauern. Aufgrund einer Vielzahl komplexer Arbeitsschritte kann das Verfahren nur von besonders geschultem Fachpersonal durchgeführt werden.

Es hat sich herausgestellt, dass eine Automatisierung nur begrenzt möglich ist. Bei teilautomatisierten, kommerziell erhältlichen Systemen (z.B. Phastsystem) sind immer noch zahlreiche manuelle Arbeitsschritte notwendig. Die Dimensionen der bislang verwendeten Gelapparaturen erlauben nur in geringem Umfang Parallelanalysen (ca. 10 Proben), aber keine Hochdurchsatzanalysen.

In der US-A-4,385,974 werden ein zweidimensionales Trennverfahren und eine Apparatur beschrieben, mit der sowohl IEF als auch eine dazu senkrecht stehende SDS-PAGE nacheinander durchgeführt werden können, ohne dass eine Bewegung von Gelen oder Gelstücken erforderlich ist. Dabei wird zwischen dem IEF-Gel und der SDS-PAGE eine nicht elektrisch leitende Flüssigkeitssperre, vorzugsweise aus Glycerin, angeordnet, die nach Beendigung des ersten IEF-Trennschrittes mittels einer Spitze abgesaugt und durch einen mit Acrylamid versetzten Äquilibrierungspuffer ersetzt wird. Bei diesem Verfahren sind jedoch noch weitere zahlreiche manuelle Arbeitsschritte notwendig: das Gießen und Polymerisieren des SDS-PA-Gels, das Überschichten mit Glycerin, das Gießen und Polymerisieren des IEF-Gels, der Einbau der Gelkassette in die Vorrichtung, das Befüllen des Reservoires etc. Damit schließt dieses komplexe Verfahren eine umfassende Automatisierung aus.

Die Verwendung eines einzigen Plattengels für beide Arbeitsschritte, wie dieses in der US-A-4,101,401 beschrieben ist, führt zu einer unzureichenden Auflösung der Proteinbanden, weil die Anforderungen an die Zusammensetzung der beiden Trennmatrizes zu unterschiedlich sind. Es ist auch schon versucht worden eine mehrdimensionale Elektrophorese im Mikromaßstab durchzuführen. So sind in dem US-Patent Nr. 6,013,165 zwei Vorrichtungen beschrieben, von denen die erste für die konventionelle Kombination aus IEF und SDS-PAGE geeignet ist und eine Kavität aufweist, während die zweite ein von mehreren parallelen Mikrokanälen durchzogenes Feld enthält und zur Durchführung alternativer 2D-Methoden verwendet werden kann. Dabei werden keine Lösungsansätze für die Automatisierung der konventionellen Methode beschrieben, bei der unter anderem auch Umpufferungs- bzw. Proteinmobilisierungsschritte notwendig sind.

Die Aufgabe der vorliegenden Erfindung besteht darin, Elektrophoresesysteme bereitzustellen, die vollständig automatisierbar sind und mit denen die Anzahl von manuell notwendigen Arbeitsschritten verringert werden oder sogar darauf verzichtet werden kann. Eine weitere Aufgabe besteht darin, die Durchführung von Elektrophoresesystemen soweit zu miniaturisieren, dass mehrere bzw. viele chromatographische bzw. Geltrennungen parallel durchgeführt werden können und dass die Trennung bzw. eine Analyse beschleunigt wird.

Diese Aufgaben werden mit der Vorrichtung gemäß der Merkmale von Anspruch 1 gelöst. Die Unteransprüche definieren bevorzugte Ausführungsformen.

Die Vorrichtung besteht in ihrer einfachsten Ausführungsform aus einer eine obere und eine untere Seite aufweisende Platte. Diese Platte weist auf der einen, beispielsweise auf der oberen Seite, einen ersten Trennkanal auf und an der unteren Seite mindestens einen zum ersten Trennkanal orthogonal verlaufenden zweiten Trennkanal. Der erste Trennkanal ist in einer einfachen Ausführungsform als eine an der Plattenoberseite ausgebildete Ausnehmung oder Nut ausgebildet und weist mindestens eine Öffnung zur Plattenunterseite auf, die als erste Öffnung oder erste Durchtrittsöffnung bezeichnet wird. Der zweite Trennkanal ist in einer einfachen erfindungsgemäßen Ausführungsform ebenfalls als eine an der Oberfläche der Plattenunterseite verlaufende längliche Ausnehmung gebildet. Dieser zweite Trennkanal verläuft zweckmäßigerweise bis zur unterseitigen ersten Öffnung des ersten Kanals bzw. verläuft über diese Öffnung hinaus. An der Stelle, an welcher der zweite Trennkanal auf die erste (untere) Öffnung des ersten Trennkanals trifft, d.h. an der Stelle an der beide Kanäle aufeinandertreffen bzw. sich kreuzen, entsteht im Boden des zweiten Trennkanals eine zur Platteninnenseite gerichtete Öffnung, die als zweite Öffnung des zweiten Trennkanäle bezeichnet wird. Über diese Öffnungen sind die beiden Trennkanäle miteinander verbunden. Durch diese Anordnung der Trenn- bzw. Elektrophoresekanäle, bei denen die Trenn- bzw. Laufstrecken der ersten und der zweiten Dimension in verschiedenen sich nicht kreuzenden Ebenen liegen, ist es möglich eine einfache Elektrophoresevorrichtung als einfach herzustellenden Wegwerfartikel auszubilden. In einer bevorzugten Ausführungsform ist die Vorrichtung als miniaturisierter Fertigchip ausgebildet.

In einer besonders bevorzugten Ausführungsform sind der erste Trennkanal und der zweite Trennkanal über einen Zwischenraum miteinander verbunden bzw. durch diesen getrennt. Dabei ist der Zwischeraum zwischen der ersten Öffnung des ersten Trennkanals und der zweiten Öffnung des zweiten Trennkanals angeordnet. An seinem oberen Ende mündet der Zwischenraum in die erste Öffnung des ersten Trennkanals und an seinem unteren Ende in die zweite Öffnung des zweiten Trennkanals.

Prinzipiell ist es möglich, die an einen Analyseautomaten adaptierbare und einschiebbare Vorrichtung ohne weitere Abdekkungen, d.h. mit offenen Kanaloberseiten zu verwenden. Dies gilt insbesondere dann wenn sie als Chip für Analysegeräte, insbesondere automatisch arbeitende Geräte, ausgebildet ist. Es hat sich jedoch als zweckmäßig erwiesen, die Vorrichtung an ihren Ober- und Unterseiten mit einer weiteren Platte oder einer Folie zu verschließen. Wird die Vorrichtung mittels weiteren Platten verschlossen, so ist es selbstverständlich möglich, einzelne Elemente der Vorrichtung in den Verschließ- bzw. Abdeckplatten anzuordnen. So ist es beispielsweise möglich, in einer unteren Abdeckplatte auf deren oberen Seite den zweiten Trennkanal oder vorzugsweise eine Mehrzahl von zweiten Trennkanälen anzuordnen. Ebenfalls ist es möglich auf diesen Abdeck- oder Abdichtplatten Einrichtungen zum Befüllen der Vorrichtung mit Reagenzien, Lösungsmitteln, Puffern, Trennmedien zum Einbringen bzw. Anschließen von Elektroden und/oder zum Beladen einer aufzutrennenden Probe anzuordnen bzw. einzuprägen, die ansonsten auf der den ersten Trennkanäle aufweisenden Platte oder in der einstückigen Ausführung auf der einzigen Platte angeordnet sind. Die Abdeckplatten und die Hauptplatte können mit üblichen Klebe- bzw. Bondingverfahren miteinander verbunden werden, wie beispielsweise Lösungsmittelbonding. Die Platten selbst lassen sich mittels einfachen, dem Fachmann bekannten Verfahren, wie Spritzguss oder Heißprägen herstellen. Vorzugsweise bestehen die Platten aus gängigen Präge- und Extrusions- oder Spritzgusstechniken zugänglichen Materialien. Als Beispiele für ein geeignetes Polymermaterial können PMMA, Polycarbonat, Polyethylenterephthalat, Polystyrol oder PDMS genannt werden. Vorzugsweise werden elastomere Kunststoffe verwendet. In einer Vielzahl von Fällen kann es bevorzugt sein die Platten aus einem durchsichtigen Kunststoff herzustellen, damit diese mittels bekannten Analyseabsorptionsverfahren zugänglich sind. Auf diese Weise ist es möglich, Analyseverfahren anzuwenden, wie sie dem Fachmann zum Auffinden und zur Konzentrationsbestimmung von bestimmten Proteinen bekannt sind.

In einer weiteren Ausführungsform ist hierzu die Rückseite der Vorrichtung mit einem reflektierenden Material versehen. Auf diese Weise ist es möglich, dass beispielsweise eingestrahltes Licht einer bestimmten Wellenlänge, beispielsweise die zweiten Trennkanäle von oben durchdringt, wobei ein Teil des Lichtes an charakteristischen Wellenlängen von der zu analysierenden Substanz absorbiert wird. Nach Reflexion an der Unterseite durchdringt das Licht zum zweiten mal die zu analysierende Probe, wobei eine weitere Absorption stattfindet. Auf diese Weise läßt sich die Analyse verfeinern und empfindlicher ausgestalten.

Der erste Trennkanäle ist üblicherweise, jedoch nicht notwendigerweise als ein zur Plattenoberseite offener Kanal ausgebildet. Er weist üblicherweise einen runden, gewölbten, vorzugsweise jedoch rechteckigen und ggf. auch dreieckigen Querschnitt auf. Den rechteckigen Querschnitten ist ein quadratischer Querschnitt bevorzugt. In einer weiteren besonders bevorzugten Ausführungsform verjüngt sich der Querschnitt des ersten Trennkanäle in Richtung auf die Plattenunterseite. In Richtung auf die Plattenunterseite weist der erste Trennkanal auch eine erste Öffnung auf. Dies bedeutet, dass er zur Plattenunterseite offen ist. Durch diese Öffnung können in der ersten Dimension aufgetrennte Analytmoleküle zu den zweiten Trennkanälen zur weiteren Auftrennung in der zweiten Dimension geleitet werden. In einer bevorzugten Ausführungsform ist der erste Trennkanal über seine gesamte Länge nach unten offen.

An dieser zur Plattenunterseite hin liegenden ersten Öffnung ist in einer ebenfalls besonders bevorzugten Ausführungsform eine insbesondere poröse bzw. permeable Trennplatte angeordnet, welche den ersten Trennkanal nach unten begrenzt. Diese Trennplatte ist jedoch für Analytmoleküle bzw. Probenmoleküle sowie für Elektrolyte und vorzugsweise Lösungsmittel durchlässig. Derartige Platten können aus beliebigen gegenüber den Proben, angewendeten Reagenzien oder Elektrolyt-Pufferlösungen inerten bzw. kompatiblen Materialien ausgebildet sein, wie beispielsweise Agarose, poröse Kunststoffe und/oder feste Gele. Prinzipiell ist es auch möglich nicht poröse undurchlässige Plattenmaterialien zu verwenden, sofern diese mittels geeigneter Lösungsmittel oder Reagenzien entfernbar oder porös gemacht werden können ohne das Analysesystem und die Analyten zu beschädigen.

Der erste Trennkanäle weist zweckmäßigerweise eine Länge von 1 bis 20 cm, vorzugsweise 1,5 bis 5 cm und vorzugsweise mindestens eine Tiefe bzw. Breite von 20 µm, zweckmäßigerweise mindestens 50 µm auf. Bevorzugte maximale Tiefen bzw. Breiten betragen 2000 µm, zweckmäßigerweise 1500 µm und insbesondere 1000 µm.

Der zweite Trennkanal weist üblicherweise einen runden, viereckigen oder auch dreieckigen Querschnitt auf und ist zur unteren Plattenseite hin über seine gesamte Länge hinweg offen. Zweckmäßigerweise ist er als Kapillare ausgebildet. In einer besonders bevorzugten Ausführungsform enthält die Vorrichtung eine Vielzahl solcher zweiten Trennkanäle, zweckmä ßigerweise jedoch mindestens 100, vorzugsweise mindestens 200, wobei mindestens 250 besonders bevorzugt sind. Die Länge der zweiten Trennkanäle beträgt üblicherweise 1 bis 20 cm, vorzugsweise 1,5 bis 15 cm, wobei 2 bis 12 bzw. 5 bis 10 besonders bevorzugt ist. Die bevorzugte Breite beträgt 5 bis 200 µm, wobei 10 bis 150 und 20 bis 100 besonders bevorzugt ist. Die üblichen Tiefen entsprechen auch hier der Breite und betragen vorzugsweise 5 bis 200, wobei 20 bis 100 µm besonders bevorzugt ist.

Eine besonders bevorzugte Ausführungsform weist zwischen dem ersten Trennkanal und dem zweiten Trennkanal einen Zwischenraum auf, der zweckmäßigerweise ebenfalls kanalförmig ausgebildet ist und vorzugsweise länglich unterhalb des ersten Trennkanals verläuft. In einer ganz besonders bevorzugten Ausführungsform weist er einen nach unten in Rich-tung zum zweiten Trennkanäle sich verjüngenden Querschnitt auf. Der Querschnitt des Zwischenraums ist insbesondere dreieckig bzw. trichterförmig ausgebildet und endet in einem kleinen Sammelkanal, der seitlich bzw. von oben in die zweite Öffnung des oder der zweiten Trennkanäle mündet. Der Zwischenraum, der als Sammel- bzw. Konzentrationsraum dient, weist in seinem oberen Teil einen Querschnittsdurchmesser von vorzugsweise mindestens 20 µm, insbesondere mindestens 50 µm und vorzugsweise höchstens 2000 µm, insbesondere höchstens 1500 µm auf und in seinem unteren Teil vorzugsweise mindestens 5 µm, insbesondere mindestens 10 µm und zweckmäßigerweise mindestens 20 µm und vorzugsweise höchstens 400 µm, insbesondere höchstens 200 µm auf.

Die Vorrichtung enthält darüber hinaus Einrichtungen zur Aufnahme von Elektroden, Pufferelektrolytlösungen etc. bzw. Anschlüsse zum Beladen und/oder Entfernen von Pufferlösungen, Elektrolytlösungen, Reagenzien, die mit den ersten und zweiten Trennkanälen bzw. dem Zwischenraum in fluider Kommunikation stehen. Da die in der Vorrichtung benötigten Mengen an Trennmitteln, Elektrolyt-Ampholyt-Reagenzien- bzw. Pufferlösungen gering sind, ist es auch möglich diese in Vorratskammern bzw. Reservoiren direkt auf der Platte anzuordnen, beispielsweise in Form von Aussparungen und Ausnehmungen.

Die Elektroden werden direkt als metallische Leiter in der Vorrichtung angeordnet. Es ist jedoch auch möglich die Elektroden als Elektrolyte bzw. Elektrolytlösungen auszubilden, welche dann die Trennkanäle mit einem externen elek-trischen Leiter verbinden.

Als Trennmittel für die Vorrichtung eignen sich sämtliche bekannten Mittel wie sie beispielsweise für die isoelektrische Fokussierung verwendet werden. Für die zweiten Trennkanäle sind üblicherweise sämtliche Gele einsetzbar, wie sie üblicherweise zur Kapillargelelektrophorese und insbesondere zur PAGE-Elektrophorese verwendet werden. Eingesetzt werden können beispielsweise Dextrane, Agarosen, Cellulosen, Polyvinylpyrrolidon, Polyvinylalkohol sowie Derivate der genannten Verbindungen und andere natürliche oder synthetische Polymere sowie Mischungen daraus. Es ist jedoch erfindungsgemäß auch möglich die zweiten Trennkanäle mit üblichen Separationsmedien zu beschicken, wie sie für chromatographische Auftrennverfahren verwendet werden, d.h. wie sie beispielsweise in der Hochdruckchromatographie (HPLC) verwendet werden oder auch in der klassischen Säueenchromatographie wie Kieselgele oder Sepharhose.

Die Erfindung betrifft auch die Verwendung der Vorrichtung zur Analyse von Proben, zur Isolierung, präparativen Reinigung und Gewinnung von Substanzen, wie beispielsweise Proteine und/oder geladene Teilchen. Die Vorrichtung hat sich besonders zur Analyse von Proteomen und Genomen als geeignet erwiesen.

Bei einer Verwendung wird üblicherweise derart vorgegangen, dass die Vorrichtung, die vorzugsweise als Chip, insbesondere miniaturisierter Chip, ausgebildet ist. Sie wird durch Einfüllen einer Gelmatrix in den ersten Trennkanal oder ggf. über Vorratskammern mit Elektrolyt- und/oder Pufferlösungen ggf. über Vorratskammern beladen. Danach wird auf die Trenn- bzw. Gelmatrix eine Lösung mit der zu analysierenden bzw. aufzutrennenden, insbesondere Makromoleküle enthaltenden, Probe aufgetragen. Nach dem Anlegen einer Spannung an die zu beiden Seiten des ersten Trennkanals beispielsweise in die Elektrolyt- bzw. Puffervorratskammern eintauchenden Elektroden werden die zu analysierenden Analytmoleküle elektrophoretisch aufgetrennt. Eine bevorzugte Elektrophoresemethode für den ersten Trennkanal ist die isoelektrische Fokussierung. Nach Beendigung der isoelektrischen Fokussierung werden die Elektrolytlösungen entfernt bzw. ausgetauscht und ggf. durch Mobilisationspuffer ersetzt.

In einer besonders bevorzugten Ausführung wird dann der bis dato mit Luft bzw. einem nicht elektrisch leitenden Mittel gefüllte Zwischenraum mit einem Sammelgel gefüllt. Diese Befüllung sowie die Entfernung von Elektrolyten und Puffern in den anderen Kanälen kann beispielsweise durch Ansaugen über eine der Vorratskammern bzw. der zum Befüllen und Entfernen vorliegenden Einrichtungen erfolgen. Sofern zwischen dem Zwischenraum, der vorzugsweise als Zwischenkanal unterhalb des Trennkanals angeordnet ist, und dem ersten Trennkanal eine Trennplatte angeordnet ist, so kann es bevorzugt sein in der Sammelgellösung des Zwischenraumes bzw. des damit eingeführten Puffers Mittel zu verwenden, welche die Trennplatte auflösen oder zumindest porös bzw. permeabel machen.

Prinzipiell ist es auch möglich in den Zwischenraum reaktive Substanzen einzuführen. Solche Substanzen können beispielsweise Markersubstanzen, Immunoreagenzien oder Substanzen für Enzymreaktionen sein, so dass die Analytmoleküle bei ihrem Durchtritt durch bzw. während der Verweildauer im Zwischenraum mit diesen reagieren. Weiterhin ist es beispielsweise möglich die Analytmoleküle im Zwischenraum durch Acetylisierung oder Glykosylierung zu derivatisieren. Durch diese Derivatisierung wird unter Umständen eine Markierung der Analytmoleküle erst möglich.

Danach werden die aufgetrennt an verschiedenen Stellen im ersten Trennkanal vorliegenden Analytmoleküle mittels einer durch Elektroden erzeugten zwischen dem ersten Trennkanal und dem zweiten Trennkanal angelegten gleichförmigen Hochspannung aus dem ersten Trennkanal in das Sammelgel überführt, wo die Analytmoleküle aufkonzentriert werden. Diese Aufkonzentrierung wird durch die bevorzugte sich nach unten verjüngende Querschnittsform des Zwischenraumes noch erhöht. Vom Zwischenraum werden dann die Analytmoleküle durch die angelegte Spannung weiter durch die zweite Öffnung der zweiten Trennkanäle in die zweiten Trennkanäle transportiert und dort über die gleichen Elektroden oder ggf. durch weitere an den sich gegenüberliegenden Enden der zweiten Trennkanäle angeordneten Elektroden in den zweiten Trennkanälen weiter aufgetrennt.

Der Nachweis der so aufgetrennten Analytmoleküle erfolgt mittels üblichen dem Fachmann bekannten Methoden, wie beispielsweise mittels Nachweis von radioaktiver Strahlung, Färbetechniken und/oder durch Absorption und/oder Emission von Licht, insbesondere UV- und UV-VIS-Licht. Die Verwendung der Vorrichtung erfolgt vorzugsweise in hierfür geeigneten Analyseautomaten. Sie ist besonders zur Auftrennung, Reinigung und Isolierung, sowie zur präparativen Gewinnung von RNA, DNA und Proteinen aus Genomen und Proteomen geeignet.

Die beiden Figuren dienen zur Erläuterung der Erfindung. Es zeigen:
Fig. 1 eine Darstellung einer einstückigen Ausführungsform mit nur einer Platte;
Fig. 2 eine schematische Darstellung einer zweistückigen Ausführungsform der erfindungsgemäßen Vorrichtung; und
Fig. 3 eine schematische Querschnittsansicht durch die zusammengesetzte Vorrichtung von Fig. 2, wobei ein Schnitt durch den ersten Trennkanal gemacht worden ist.

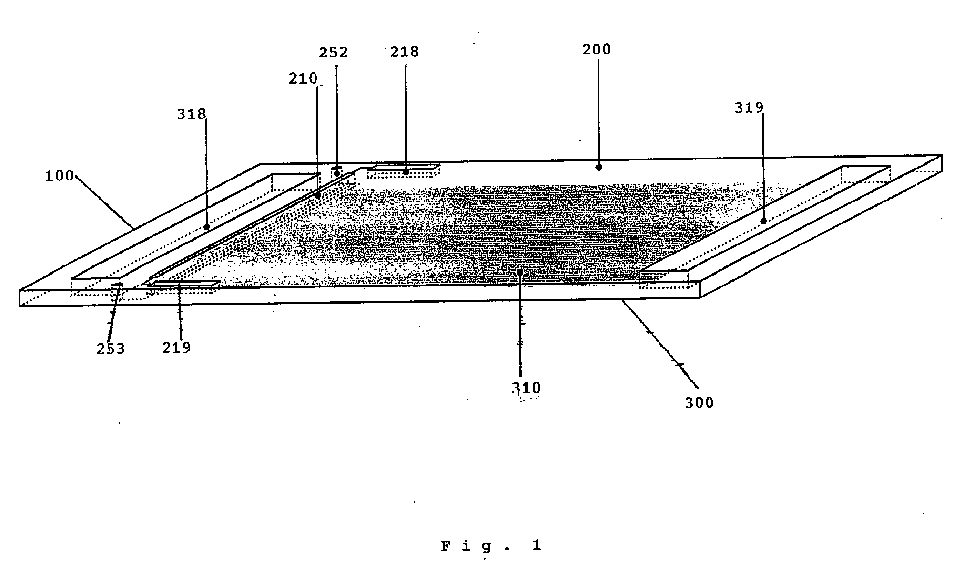

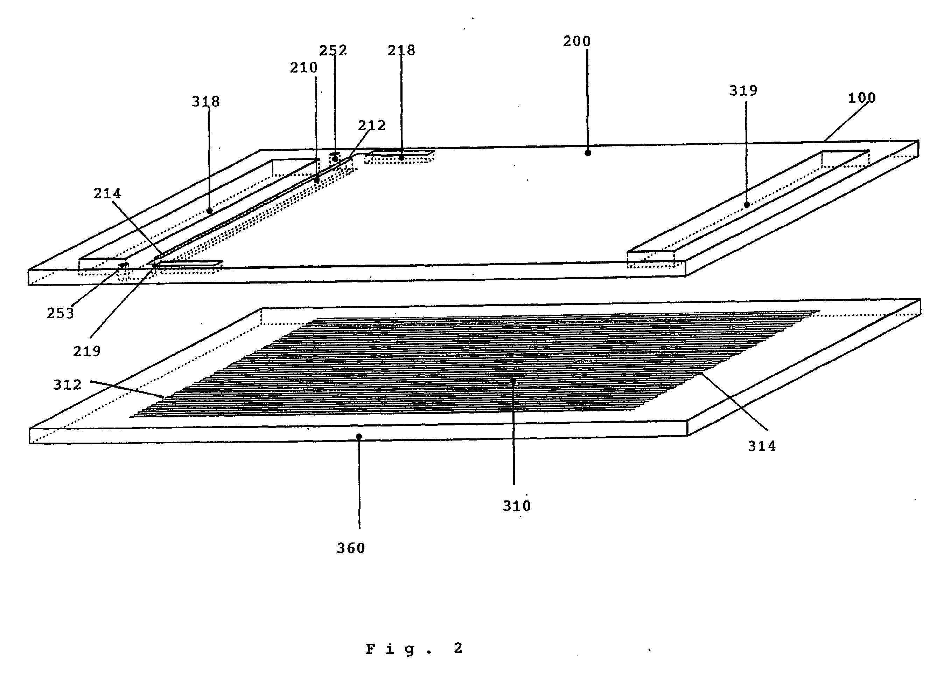

Alle zur Durchführung von Elektrophoresesystemen benötigten Trenn- und Übergangsstrecken sowie die Strukturelemente zur Probenauftragung und Konzentrierung und Einrichtungen zur Zuführung von Trennmedien, Pufferlösungen und Reagenzien sind vorzugsweise, wie in Fig. 1 dargestellt, auf einer einzigen Platte untergebracht. Prinzipiell ist es jedoch auch möglich einzelne Elemente auf separaten Platten anzuordnen, welche dann beispielsweise als Abdeckplatten dienen, wie dies exemplarisch in Fig. 2 dargestellt ist, worin die Vorrichtung 100 zum besseren Verständnis in einer Anordnung aus zwei mikro-strukturierten Platten 100, 360 dargestellt ist.

Die Vorrichtung kann beispielsweise als miniaturisierter Chip ausgebildet sein und die Größe einer Kreditkarte aufweisen.

Die Platte 100 weist Vorratskammern 218, 219, 318, 319 für Puffer und/oder Elektrolytlösungen und einen ersten Trennkanal 210 sowie eine mit einem Zwischenraum 250 kommunizierende Pufferzuführung 252 und eine Pufferableitung 253 auf.

Die untere Plattenseite 300 von Fig. 1 bzw. die Bodenplatte 360 von Fig. 2 weist eine Mehrzahl von darin ausgebildeten zweiten Trennkanälen 310 auf.

Der erste Trennkanal 210 weist normalerweise einen rechteckigen Querschnitt auf. In einer Ausführungsform der vorliegenden Erfindung ist der erste Trennkanal 210 in seinem oberen Teil weit und in seinem unteren Teil eng ausgebildet. Beispielsweise kann der Durchmesser im oberen Teil des ersten Trennkanals 210 im Bereich von 500 bis 1000 µm und der Durchmesser im unteren Teil des ersten Trennkanals 210 im Bereich von 20 bis 200 µm liegen.

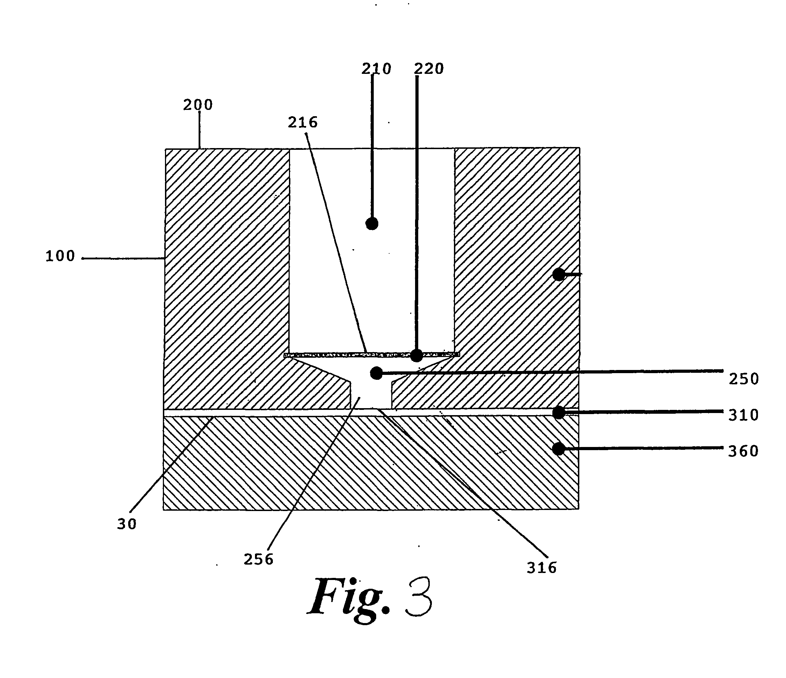

In einer weiteren in Fig. 3 dargestellten Ausführungsform weist der erste Trennkanal 210 eine Trennwand bzw. Trennplatte 220 auf, die porös bzw. permeabel ist oder die mittels geeigneten Mitteln nach der ersten Elektrophorese (IEF) in einen porösen, permeablen Zustand überführt oder sogar ganz aufgelöst werden kann. Diese Trennwand 220 trennt den ersten Trennkanal 210 von dem Zwischenraum 250. Wie Fig. 3 zu entnehmen ist, läuft der Zwischenraum 250 nach unten trichterförmig zu und mündet in einen kleinen Sammel- oder Transfergang 256, der an der zweiten Öffnung 316 des zweiten Kanals 310 endet.

Die Plattenunterseite 300 weist in der Regel mehrere, zweckmäßigerweise mehrere hundert parallele zweite Trennkanäle 310 auf. Die Platte 100 besteht bevorzugterweise aus einem Kunststoffmaterial.

Die Trennkanäle 310 der zweiten Dimension können beispielsweise wie folgt befüllt werden: Die Öffnungen der Reservoire 218, 219 und der Pufferzuführung 252 sowie der Pufferableitung 253 und die des ersten Trennkanals 210 werden mit einem Klebeband, einer Folie oder einer Platte verschlossen (nicht dargestellt). Das Reservoir 319 wird mit einer Monomer- oder Polymerlösung befüllt. Als Monomere können hier beispielsweise sämtliche für derartige Verfahren übliche Gel-bildende Monomere verwendet werden. Durch Anlegen eines leichten Unterdrucks an Reservoir 318 wird die Lösung in die Trennkanäle 310 transportiert, bis diese komplett befüllt sind. Falls eine Monomerlösung verwendet wird, so kann die Polymerisation in an sich bekannter Weise durch bereits in der Lösung enthaltene Katalysatoren und/oder durch Belichtung bewirkt werden.

Die Trennstrecke, die in etwa der Länge des ersten Trennkanals 210 in der Platte 100 entspricht und der ersten Dimension zuzuordnen ist, kann wie folgt befüllt werden: Die Trennstrecke der ersten Dimension, also der erste Trennkanal 210, kann durch Einbringen einer Puffer-, Monomer- oder Polymerlösung in Reservoir 218, 219 ggf. durch Anlegen eines Über- oder Unterdrucks befüllt werden.

Schließlich kann dann die Trennstrecke, d.h. der erste Trennkanal 210 der ersten Dimension mit den Trennkanälen 310 der zweiten Dimension wie folgt verbunden werden: Durch Einleitung einer Puffer-, Monomer- oder Polymerlösung in die Pufferzuführung 252 wird der Zwischenraum 250 gefüllt und dadurch eine Verbindung zwischen der ersten und der zweiten Dimension hergestellt. Da der so mit einem Gel befüllte Zwischenraum 250 ebenfalls zur Auftrennung oder auch zur Durchführung von Reaktionen verwendet werden kann, besteht die Möglichkeit, in einem System bis zu drei verschiedene Trenn- bzw. Reaktionsmatrizes zu verwenden.

Wie bereits oben angesprochen wurde, läßt sich mit der erfindungsgemäßen als Chip ausgebildeten Analysevorrichtung hervorragend eine 2D-Elektrophorese durchführen. In dem ersten Trennkanal 210, die der ersten Dimension entspricht, wird die isoelektrische Fokussierung durchgeführt. In den zweiten Trennkanälen 310 an der Plattenunterseite 300, die der zweiten Dimension entsprechen, erfolgt dann mit den Analyten aus der isoelektrischen Fokussierung die SDS-Polyacrylamidgelelektrophorese.

In einer Ausführungsform der Verwendung wird eine 2D-Gelelektrophorese wie folgt durchgeführt. Die isoelektrische Fokussierung wird im ersten Trennkanal 210 durchgeführt. Dazu wird eine Gelmatrix in den ersten Trennkanal 210 eingefüllt, während Elektrolytlösungen in die Pufferreservoires 218, 219 gegeben werden. Wie beispielsweise auch aus Figur 3 zu ersehen ist, ist der erste Trennkanal 218 zur Durchführung der isoelektrischen Elektrophorese durch eine Trennwand 220 und einen zunächst Luft- oder einen nicht leitenden Lösungsmittel-gefüllten Spalt von den z.B. mit Polyacrylamid gefüllten Trennkanälen 310 getrennt.

Nach dem Einbringen des IEF-Trennmediums (z.B. einer Ampholytlösung in Agarose oder Polyacrylamid) in den oberen Teil des ersten Trennkanals 210, von Säure und Lauge in die dafür vorgesehenen Reservoires 218, 219 als Elektrolytlösungen und der Proteinprobe wird eine elektrische Spannung nach einem festgelegten Protokoll angelegt. Nach Beenden der isoelektrischen Fokussierung werden die IEF-Elektrolytlösungen abgeleitet und ein weiterer Elektrophoresepuffer in die Pufferreservoires 218, 219 eingeleitet.

Gegebenenfalls wird die alte Elektrolytlösung erst gegen eine Mobilisierungslösung ausgetauscht. Nach einer Inkubationsphase wird dann diese Lösung durch Elektrodenpuffer ersetzt.

Dann wird der unter dem ersten Trennkanal 210 liegende Zwischenraum 250 über die Zuführung 252 mit Sammelgellösung gefüllt. Durch Ansteuerung von Elektroden in den Reservoires 318, 319 und dem ersten Trennkanal 210, (218, 219) mit Hochspannung werden Analytmoleküle aus dem oberen Teil des ersten Trennkanals 210 durch die Trennwand 220 in den trichterförmigen Teil des Zwischenraumes 250 transportiert. An dieser Stelle kommt es zur Konzentration der Analytmoleküle. Durch Anlegen einer weiteren Spannung werden die konzentrierten Analytmoleküle in die zweiten Trennkanäle 310 hineindosiert, wo sie dann gemäß ihrer Molekülmasse aufgetrennt werden und anschließend im Chip optisch durch die Plattenoberseite 200 oder Plaltemuterseite 300 oder mit anderen Mitteln durch zusätzliche integrierte Strukturen nachgewiesen werden können.

In einer bevorzugten Ausführungsform enthält die Sammelgutlösung eine Substanz zur Permeabilisierung der Trennwand 220 in dem ersten Trennkanal 210.

Mit dem 2D-gelelektrophoretischen Verfahren können alle Gemische von Makromolekülen effektiv aufgetrennt werden, als Beispiele können hier Proteingemische oder Nukleingemische genannt werden.

Ein besonderer Vorteil des Chips besteht darin, dass das gesamte mikrofluidische Trennsystem in zwei bzw. drei unabhängig voneinander befüllbare dreidimensional angeordnete Kompartimente aufgeteilt ist, wobei alle diese Kompartimente in dem Chip integriert sind. Diese Aufteilung ermöglicht eine Durchführung beispielsweise der konventionellen 2D-Gelelektrophorese im miniaturisierten Maßstab auf einem Chip, der mittels eines geeigneten Betreibergerätes voll automatisch betrieben werden kann. Von besonderem Vorteil ist die Verwendung des trichterförmigen Zwischenraums 250 zur Probenkonzentrierung. Herrscht ein elektrischer Potentialgradient über dieser Struktur, so erfolgt aufgrund der besonderen Geometrie, was auf die Verjüngung des Trichters und damit auf die zunehmende Dichte der elektrischen Feldlinien zurückzuführen ist, eine räumliche und zeitliche Aufkonzentration geladener Analytmoleküle. Der Chip ermöglicht die Kombination der Leistungsfähigkeit der konventionellen 2D-Gelelektrophorese mit der hohen Auflösung der Kapillarelektrophorese und der Verkürzung der Analysezeiten durch Übertragung auf Mikrostrukturen. Die Anordnungen von Zuführungen und Vorratskammern bzw. Reservoires auf der Vorrichtung, sowie die Ausbildung miniaturisierter Chips, insbesondere Fertigchips, ermöglicht die Automatisierung der kompletten Analyse.

### Bezugszeichenliste:

- 100: Hauptplatte
- 200: Plattenoberseite
- 300: Plattenunterseite
- 210: erster Trenn kanal
- 212, 214: gegenüberliegende Enden des ersten Trennkanals
- 216: erste Öffnung
- 218: mit dem Ende 212 kommunizierende Vorratskammer des ersten Trennkanals
- 219: mit dem Ende 214 kommunizierende Vorratskammer des ersten Trennkaanals
- 220: Trennwand
- 250: Zwischenraum
- 252: Pufferzuleitung
- 253: Pufferableitung
- 256: Zwischenraumgang
- 310: zweiter Trennkanall
- 312, 314: gegenüberliegende Enden des zweiten Trennkanals
- 316: zweite Öffnung
- 318: mit dem Ende 312 des zweiten Trennkanals in Verbindung stehende Vorratskammer
- 319: mit dem Ende 314 in Verbindung stehende Vorratskammer
- 360: Bodenplatte

## Patentansprüche

1. Vorrichtung zur elektrophoretischen Auftrennung von Molekülen umfassend mindestens eine eine obere (200) und eine untere (300) Seite aufweisende Platte (100), einen zur Aufnahme mindestens eines ersten Trennmediums ausgebildeten ersten Trennkanal (210), mindestens einen hierzu orthogonal verlaufenden zur Aufnahme eines zweiten Trennmediums ausgebildeten zweiten Trennkanal (310), sowie ggf. Einrichtungen zum Befüllen der Vorrichtung mit Reagenzien, Lösungsmitteln, Puffer, Trennmedien und/oder zum Beladen mit einer aufzutrennenden Probe, sowie Anschlüsse zum Anlegen von elektrischer Trennspannung an die Trennkanäle, wobei der erste Trennkanal (210) auf der oberen Plattenseite (200) angeordnet ist und zu der unteren Plattenseite mindestens eine erste Öffnung (216) aufweist **dadurch gekennzeichnet, dass** der zweite Trennkanal (310) auf der unteren Plattenseite (300) angeordnet ist und mindestens eine zweite Öffnung (316) aufweist, wobei die erste Öffnung (216) des ersten Trennkanals und die zweite Öffnung (316) des zweiten Trennkanals miteinander verbunden sind.

2. Vorrichtung nach Anspruch 1, **dadurch gekennzeichnet, dass** zwischen dem ersten und zweiten Trennkanal ein Zwischenraum (250) angeordnet ist, über den die erste Öffnung (216) und die zweite Öffnung (316) miteinander verbunden sind.

3. Vorrichtung nach einem der vorhergehenden Ansprüche, **dadurch gekennzeichnet, dass** der erste Trennkanal (210) einen rechteckigen und/oder trichterförmigen Querschnitt aufweist.

4. Vorrichtung nach einem der Ansprüche 2 oder 3, **dadurch gekennzeichnet, dass** der Zwischenraum (250) als ein unter dem ersten Trennkanal verlaufender Zwischenkanal ausgebildet ist.

5. Vorrichtung nach einem der Ansprüche 2 - 4, **dadurch gekennzeichnet, dass** der Zwischenraum (250) einen trichterförmigen Querschnitt aufweist.

6. Vorrichtung nach einem der vorhergehenden Ansprüche, **dadurch gekennzeichnet, dass** die Vorrichtung eine die obere Seite (200) zumindest teilweise verschließende Abdeckung aufweist.

7. Vorrichtung nach einem der vorhergehenchen Ansprüche, **dadurch gekennzeichnet, dass** die Vorrichtung eine die untere Seite (300) Zumindest teilweise Uershlie Beude Abdeckung aufweist.

8. Vorrichtung nach einem der Ansprüche 6 oder 7, **dadurch gekennzeichnet, dass** die Abdeckung eine Abdeckplatte oder eine Folie ist.

9. Vorrichtung nach einem der vorhergehenden Ansprüche, **dadurch gekennzeichnet, dass** die erste Öffnung (216) des ersten Trennkanals (210) mittels einer durchlässigen Trennwand verschlossen ist.

10. Vorrichtung nach einem der vorhergehenden Ansprüche, **dadurch gekennzeichnet, dass** die zweiten Trennkanäle parallel verlaufende kapillare Trennkanäle sind.

11. Vorrichtung nach einem der Ansprüche 2 - 10, **dadurch gekennzeichnet, dass** die ersten und zweiten Trennkanäle sowie der Zwischenraum voneinander getrennt befüllbar sind.

12. Verwendung einer Vorrichtung nach einem der vorhergehenden Ansprüche zur Analyse von Proben, zur Isolierung, Reinigung und präparativen Gewinnung von chemischen Substanzen, insbesondere von RNA, DNA und Proteinen.

## Claims

1. Apparatus for the electrophoretic separation of molecules, the said apparatus comprising at least one plate (100) that has a top side (200) and a bottom side (300), a first separating channel (210) designed for the accommodation of at least one first separating medium, at least one second separating channel (310) that extends orthogonally thereto and is designed for the accommodation of a second separating medium, as well as, where applicable, devices for filling the apparatus with reagents, solvents, buffers, separating media and/or for loading with a specimen to be separated, as well as connections for applying electric isolating voltage to the separating channels, wherein the first separating channel (210) is disposed on the top side (200) of the plate and includes at least one first opening (216) to the bottom side of the plate, **characterised in that** the second separating channel (310) is disposed on the bottom side (300) of the plate and includes at least one second opening (316), wherein the first opening (216) of the first separating channel and the second opening (316) of the second separating channel are interconnected.

2. Apparatus according to claim 1, **characterised in that** an intermediate space (250) is disposed between the first and second separating channel, by means of which intermediate space the first opening (216) and the second opening (316) are interconnected.

3. Apparatus according to one of the preceding claims, **characterised in that** the first separating channel (210) has a rectangular and/or funnel-shaped cross-section.

4. Apparatus according to one of claims 2 or 3, **characterised in that** the intermediate space (250) is in the form of an intermediate channel that extends under the first separating channel.

5. Apparatus according to one of claims 2 - 4, **characterised in that** the intermediate space (250) has a funnel-shaped cross-section.

6. Apparatus according to one of the preceding claims, **characterised in that** the apparatus includes a cover that closes the top side (200) at least partially.

7. Apparatus according to one of the preceding claims, **characterised in that** the apparatus includes a cover that closes the bottom side (300) at least partially.

8. Apparatus according to one of claims 6 or 7, **characterised in that** the cover is a cover plate or a foil.

9. Apparatus according to one of the preceding claims, **characterised in that** the first opening (216) of the first separating channel (210) is closed by means of a permeable partition wall.

10. Apparatus according to one of the preceding claims, **characterised in that** the second separating channels are capillary separating channels that extend in parallel.

11. Apparatus according to one of claims 2-10, **characterised in that** the first and second separating channels as well as the intermediate space can be filled separately from each other.

12. Use of an apparatus according to one of the preceding claims for the analysis of specimens, for isolating, purifying and preparatory recovery of chemical substances, more especially RNA, DNA and proteins.

## Revendications

1. Dispositif de séparation électrophorétique de molécules, comprenant au moins une plaque (100) comportant une face supérieure (200) et une face inférieure (300), et comprenant un premier canal de séparation (210) conçu pour recevoir au moins un premier milieu de séparation, au moins un second canal de séparation (310) orthogonal à celui-ci, destiné à recevoir un second milieu de séparation, ainsi que, le cas échéant, des équipements permettant de remplir le dispositif de réactifs, de solvants, de tampons, de milieux de séparation et/ou de le charger d'un échantillon à séparer, ainsi que des raccordements permettant d'appliquer une tension électrique de séparation auxdits canaux de séparation, le premier canal de séparation (210) étant agencé sur la face supérieure (200) de la plaque et comportant en direction de la face inférieure de la plaque au moins une première ouverture (216), **caractérisé en ce que** le second canal de séparation (310) est agencé sur la face inférieure (300) de la plaque et comportant au moins une seconde ouverture (316), la première ouverture (216) dudit premier canal de séparation et la seconde ouverture (316) dudit second canal de séparation communiquant entre elles.

2. Dispositif selon la revendication 1, **caractérisé en ce qu'**entre le premier et le second canal de séparation, un espace intermédiaire (250) est agencé, par l'intermédiaire duquel la première ouverture (216) et la seconde ouverture (316) communiquent entre elles.

3. Dispositif selon l'une des revendications précédentes, **caractérisé en ce que** le premier canal de séparation (210) présente une section rectangulaire et/ou en forme d'entonnoir.

4. Dispositif selon l'une des revendications 2 ou 3, **caractérisé en ce que** l'espace intermédiaire (250) est réalisé sous forme d'un canal intermédiaire s'étendant sous le premier canal de séparation.

5. Dispositif selon l'une des revendications 2 à 4, **caractérisé en ce que** l'espace intermédiaire (250) présente une section en forme d'entonnoir.

6. Dispositif selon l'une des revendications précédentes, **caractérisé en ce que** le dispositif comporte un recouvrement obturant la face supérieure (200) au moins en partie.

7. Dispositif selon l'une des revendications précédentes, **caractérisé en ce que** le dispositif comporte un recouvrement obturant la face inférieure (300) au moins en partie.

8. Dispositif selon l'une des revendications 6 ou 7, **caractérisé en ce que** le recouvrement est une plaque de recouvrement ou une feuille.

9. Dispositif selon l'une des revendications précédentes, **caractérisé en ce que** la première ouverture (216) du premier canal de séparation (210) est obturée au moyen d'une paroi de séparation perméable.

10. Dispositif selon l'une des revendications précédentes, **caractérisé en ce que** les seconds canaux de séparation sont des canaux de séparation capillaires s'étendant parallèlement.

11. Dispositif selon l'une des revendications 2 à 10, **caractérisé en ce que** les premiers et seconds canaux de séparation ainsi que l'espace intermédiaire peuvent être remplis séparément les uns des autres.

12. Utilisation d'un dispositif selon l'une des revendications précédentes pour l'analyse d'échantillons, pour l'isolement, la purification et l'obtention préparative de substances chimiques, en particulier d'ARN, d'ADN et de protéines.
